# EUROPÄISCHE PATENTANMELDUNG

(11) **EP 0 524 458 A2**
(43) Veröffentlichungstag der Anmeldung: **27.01.1993**
(21) Anmeldenummer: 92111149.8
(22) Anmeldetag: 01.07.1992
(51) Int. Cl.: B65G 65/06, B65G 39/20, B65G 19/10, B65G 45/14

(54) **Kratzerförderer für loses Schüttgut**

(30) Priorität: 23.07.1991 DE 4124405
(71) Anmelder: KRUPP POLYSIUS AG, D-59269 Beckum (DE)
(72) Erfinder: Lütke, Hubertus, W-4720 Beckum (DE)
(74) Vertreter: Tetzner, Volkmar, Dr.-Ing. Dr. jur.

(57) **Zusammenfassung**

Bei diesem Kratzerförderer für loses Schüttgut sind die schaufelförmigen Förderelemente im Bereich wenigstens zweier parallel zueinander verlaufender Bezugslängsmittelebenen (6a,7a) jeweils über Stützrollen (9a,9b) von Rollenführungseinrichtungen mit oberen und unteren Laufflächen (12a,13a) abgestützt und geführt. Um ein Verkeilen von Stützrollen in den Rollenführungseinrichtungen zu vermeiden, sind die Stützrollen beiderseits der zugehörigen Bezugslängsmittelebene vorgesehen, und jede Rollenführungseinrichtung enthält auf einer Seite der Bezugslängsmittelebene eine obere Führungsschiene (12) und auf der anderen Seite eine untere Führungsschiene (13) für die Stützrollen.

## Beschreibung

Die Erfindung betrifft einen Kratzerförderer für loses Schüttgut mit einem unteren Gutfördertrum und einem oberen Rücklauftrum, insbesondere in Form eines Schüttgut von einer Schüttguthalde entnehmenden Abbaukratzerförderers, entsprechend dem Oberbegriff des Anspruches 1.

Kratzerförderer der vorausgesetzten Art sind aus der Praxis für verschiedene Einsatzfälle sowie in unterschiedlichen Ausführungsformen bekannt. Außerdem ist ein Beispiel eines Kratzerförderers in der EP-B-230 612 beschrieben und veranschaulicht.

Bei diesen bekannten Kratzerförderern werden die von den endlos umlaufenden Zugmitteln (z.B. Laschenförderketten, Buchsenketten, Rundstahlketten, Drahtseilen oder dgl.) gezogenen und dabei loses Schüttgut abfördernden Förderschaufeln über die Stützrollen von Rollenführungseinrichtungen abgestützt und geführt. Bei diesen Rollenführungseinrichtungen handelt es sich in der Regel um in Längsrichtung des Förderers verlaufende, im Querschnitt U-förmige Führungsschienen, bei denen die lichte Weite zwischen den beiden U-Schenkeln geringfügig größer ist als der Stützrollendurchmesser. Auf diese Weise bilden die einander gegenüberliegenden Innenseiten der beiden U-Schenkel obere und untere Laufflächen für die Stützrollen. Bei der praktischen Verwendung eines solchen Kratzerförderers, insbesondere wenn er zum Entnehmen des Schüttgutes von einer Schüttguthalde in Form eines Abbaukratzerförderers eingesetzt wird, kommt es nun beispielsweise durch Überschüttung des Förderers von oben oder durch Überfüllung einzelner Förderschaufeln mitunter vor, daß zu förderndes Schüttgut in die Führungsschienen gelangt. Hierdurch kann sich das Schüttgut vor allem zwischen den Stützrollen und den Laufflächen - gegebenenfalls allmählich aufbauend - festsetzen, wodurch sich die Rollen in den Führungsschienen verkeilen und die die Stützrollen tragenden Achsen bzw. Bolzen durch diese Belastung brechen können.

Der Erfindung liegt daher die Aufgabe zugrunde, einen Kratzerförderer der im Oberbegriff des Anspruches 1 vorausgesetzten Art in der Weise zu verbessern, daß durch verhältnismäßig einfache konstruktive Mittel eine zuverlässige und im wesentlichen störungsfreie Abstützung und Führung der Förderelemente durch die Stützrollen gewährleistet ist.

Diese Aufgabe wird erfindungsgemäß durch die im Kennzeichen des Anspruches 1 angegebenen Merkmale gelöst. Dabei sind vorteilhafte Ausgestaltungen und Weiterbildungen der Erfindung in den Unteransprüchen angegeben.

Während bei den bekannten Kratzerförderern die zu einer Bezugslängsmittelebene gehörenden Stützrollen in einer einzigen Reihe hintereinander liegen, sind bei der erfindungsgemäßen Ausführung die Stützrollen auf beiden Seiten der zugehörigen Bezugslängsmittelebene vorgesehen. Dies bedeutet nicht nur eine relativ kippsichere Ausbildung und Betriebsweise, sondern ist eine besonders zweckmäßige Voraussetzung dafür, daß jede Rollenführungseinrichtung zumindest im Bereich des unteren Gutfördertrums im wesentlichen durch eine über den Stützrollen auf der einen Seite der Bezugslängsmittelebene liegende obere Führungsschiene und eine unter den Führungsrollen auf der anderen Seite der Bezugslängsmittelebene untere Führungsschiene gebildet werden kann, wobei dann die obere Führungsschiene die obere Lauffläche und die untere Führungsschiene die untere Lauffläche für die entsprechenden Stützrollen bildet. Durch diese getrennte Ausbildung und Anordnung der unteren und oberen Laufflächen bzw. der unteren und oberen Führungsschienen wird die obere Abstützung und Führung der Stützrollen und somit der schaufelförmigen Förderelemente nur auf der einen Seite der Bezugslängsmittelebene und die untere Abstützung und Führung der Stützrollen/Förderelemente nur auf der gegenüberliegenden anderen Seite der Bezugslängsmittelebene vorgenommen. Wenn demzufolge die Förderelemente des unteren Gutfördertrums dieses Kratzerförderers von zu förderndem Gut überschüttet oder zumindest teilweise überfüllt werden, dann kann es zuverlässig vermieden werden, daß sich die Stützrollen in den Führungsschienen verkeilen (wie bei den geschilderten bekannten Ausführungen). Während sich dabei an den die oberen Laufflächen bildenden oberen Führungsschienen überhaupt kein Material ansammeln kann, kann sich evtl. auf den unteren Führungsflächen der unteren Führungsschienen ablagerndes Gut ohne Schwierigkeiten überrollt werden.

Generell können die schaufelförmigen Förderelemente direkt mit den sie abstützenden und führenden Stützrollen bzw. deren Halterungen verbunden sein, während dann unabhängige Zugmittel, z.B. Buchsenketten, Rundstahlketten, Drahtseile oder dgl. in geeigneter Ausführung und Anordnung für die Verbindung der Förderelemente miteinander sowie für deren endlosen Umlauf sorgen. Besonders bevorzugt wird aber eine Ausführung, bei der als Zugmittel für diese Förderelemente wenigstens zwei mit Querabstand und parallel zueinander verlaufende Laschenförderketten vorgesehen sind, deren Kettenglieder durch gleichzeitig die Stützrollen drehbeweglich lagernde Gelenkbolzen verbunden sind. In diesem Falle bilden dann die Längsmittelebenen der Laschenförderketten die genannten Bezugslängsmittelebenen, und die Stützrollen sind einander abwechselnd auf der einen und anderen Außenseite der Laschenförderkette auf den entsprechenden, jeweils einseitig seitlich auskragenden Gelenkbolzen angeordnet.

Bei der zuletzt beschriebenen Ausbildung sind ferner die Merkmale gemäß Anspruch 4 besonders vorteilhaft, weil durch die auf den Außenseiten einiger Laschenkettenglieder seitlich vorstehenden Reinigungslappen in die Führungsschiene, insbesondere in die untere Führungsschiene eingedrungene Fremdkörper (vor allem Schüttgutanteile) wieder herausgefördert werden können und somit die entsprechende Lauffläche stets zumindest weitgehend freigehalten werden kann.

Die Erfindung sei nachfolgend anhand der Zeichnung noch näher erläutert. In dieser Zeichnung zeigen:
- Fig.1: eine stark vereinfacht dargestellte, schematische Seitenansicht des Kratzerförderers;
- Fig.2: eine Querschnittsansicht durch den Kratzerförderer, etwa entlang der Linie II-II in Fig.1;
- Fig.3: eine Detail-Schnittansicht etwa entsprechend der Linie III-III in Fig.2.

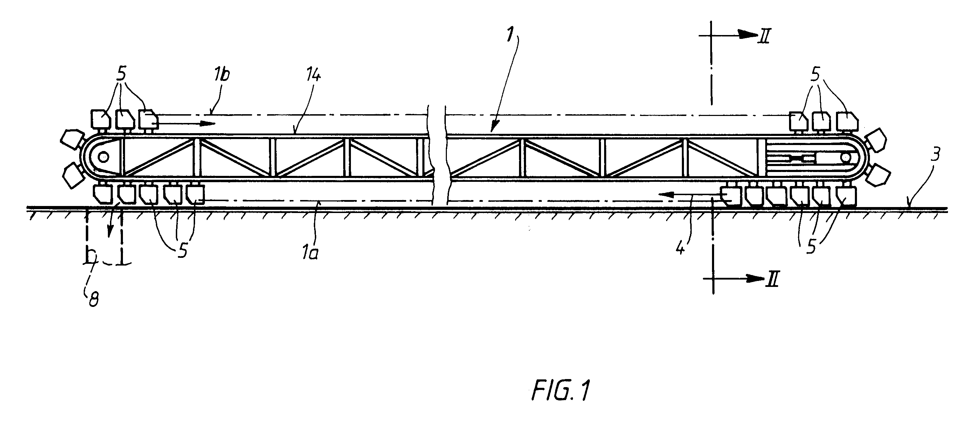

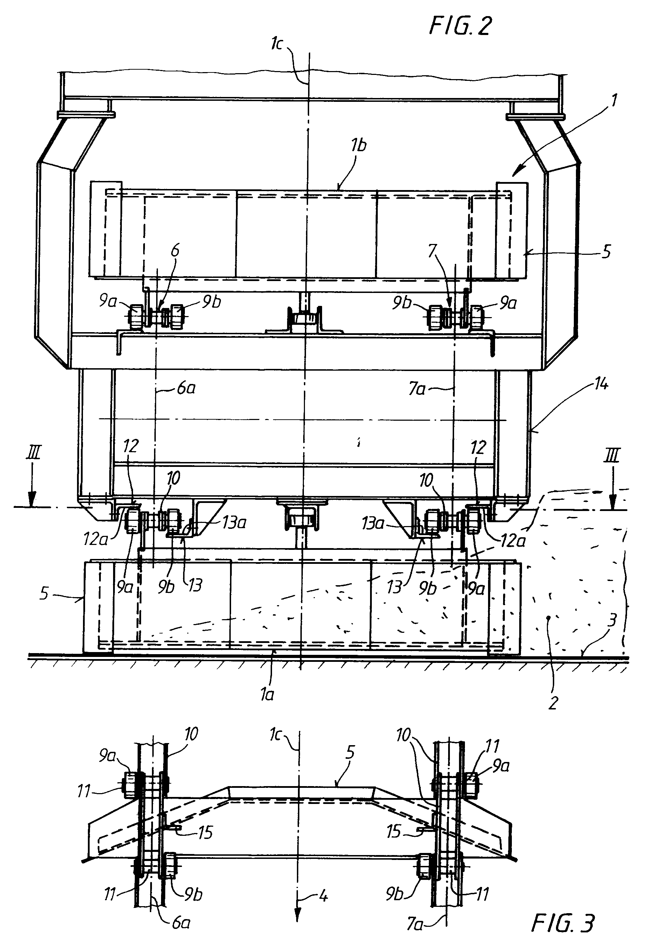

Der in Fig.1 veranschaulichte erfindungsgemäße Kratzerförderer 1 ist zum Abfördern von losem Schüttgut bestimmt. Im vorliegenden Beispiel sei angenommen, wie auch Fig.2 zusätzlich verdeutlicht, daß dieser Kratzerförderer 1 vor allem in Form eines Schüttgut 2 von einer Schüttguthalde 3 entnehmenden (abbauenden und abfördernden) Kratzerabbauförderers ausgebildet ist.

Der Kratzerförderer 1 enthält in an sich bekannter Weise eine Vielzahl von in Gutförderrichtung (vgl. Pfeil 4) hintereinander angeordneten, schaufelförmigen Förderelementen, nachfolgend Kratzerschaufeln 5 genannt, die durch wenigstens ein umlaufendes Zugmittel, im vorliegenden Beispiel jedoch vorzugsweise durch zwei mit Querabstand und parallel zueinander verlaufende Laschenförderketten 6, 7 so miteinander verbunden sind, daß diese Kratzerschaufeln ebenfalls in Richtung des Pfeiles 4 endlos umlaufend im Kratzerförderer 1 angeordnet sind. Dementsprechend weist der Kratzerförderer 1 unmittelbar über dem Boden der Schüttguthalde 3 ein unteres Gutfördertrum 1a sowie ein oberes Rücklauftrum 1b auf, wobei die Laschenförderketten 6 und 7 an den Enden des Kratzerförderers 1 über Trommeln oder Umlenkräder umgelenkt und von einem nicht näher veranschaulichten Antrieb in an sich bekannter Weise angetrieben werden. Das in Richtung des Pfeiles 4 von den Kratzerschaufeln 5 geförderte Schüttgut kann beispielsweise durch eine Öffnung 8 an einem Endbereich des Kratzerförderers 1 oder auch in jeder sonst geeigneten Weise abgeführt werden.

Die beiden Laschenketten 6, 7 laufen in vertikalen Längsmittelebenen 6a bzw. 7a um, die im vorliegenden Falle auch gleichzeitig Bezugslängsmittelebenen für Führungseinrichtungen für die Kratzerschaufeln 5 bilden. Diese Kratzerschaufeln 5 sind im Bereich dieser Bezugslängsmittelebenen bzw. Laschenförderketten-Längsmittelebenen 6a und 7a jeweils über Stützrollen 9a, 9b von schienenförmigen Rollenführungseinrichtungen abgestützt und geführt, was weiter unten noch näher erläutert wird.

Die Stützrollen 9a, 9b sind im veranschaulichten Ausführungsbeispiel nicht unmittelbar an den Kratzerschaufeln 5 gehaltert, sondern an den Laschenförderketten 6 und 7. Diese generell gleichartig ausgebildeten Laschenförderketten 6, 7 weisen je eine Vielzahl von unmittelbar hintereinander angeordneten Laschenkettengliedern 10 auf, die durch Gelenkbolzen 11 gelenkig miteinander verbunden sind, die ihrerseits gleichzeitig Rollenachsen bilden, um die Stützrollen 9a, 9b drehbeweglich zu lagern.

Von besonderer Bedeutung ist nun, daß die Stützrollen 9a, 9b auf beiden Seiten der zugehörigen Bezugslängsmittelebene, also im vorliegenden Beispiel der Längsmittelebenen 6a bzw. 7a, vorgesehen sind. Zu diesem Zweck sind diese Stützrollen 9a, 9b in Längsrichtung des Förderers 1 in gleichmäßiger Verteilung einander abwechselnd auf der einen und anderen Außenseite der jeweils zugehörigen Laschenkette 6, 7 und dabei auf den entsprechenden, jeweils einseitig seitlich auskragenden Gelenkbolzen 11 angeordnet, wie es in Fig.3 veranschaulicht ist.

Des weiteren enthält jede der oben bereits angedeuteten Rollenführungseinrichtungen, die jeweils zu einer der genannten Bezugslängsmittelebenen 6a, 7a entsprechend ausgerichtet ist, im Bereich des unteren Gutfördertrums 1a eine über den Stützrollen 9a auf der einen Seite der Bezugslängsmittelebene 6a, 7a liegende obere Führungsschiene 12 sowie eine unter den anderen Führungsrollen 9b auf der anderen Seite der Bezugslängsmittelebene 6a bzw. 7a liegende untere Führungsschiene 13, wobei die oberen Führungsschienen 12 an ihrer Unterseite obere Führungs- bzw. Laufflächen 12a und die unteren Führungsschienen 13 an ihrer Oberseite untere Führungs- bzw. Laufflächen 13a für die zugehörigen Stützrollen 9a bzw. 9b bilden, um letztere abzustützen und zu führen, wie es in Fig.2 zu erkennen ist.

Der Kratzerförderer 1 kann in üblicher Weise sowie in Anpassung an den jeweils gewünschten Einsatzzweck ein fachwerkartiges Rahmengestell 14 aufweisen (z.B. entsprechend den Fig.1 und 2). Dabei sind die zuvor erläuterten Rollenführungseinrichtungen fest an diesem Rahmengestell 14 gehaltert, wobei die oberen und unteren Führungsschienen 12, 13 zweckmäßig an der Unterseite dieses Rahmengestelles 14 in geeigneter Weise befestigt sind. Diese oberen und unteren Führungsschienen 12, 13 können auf verhältnismäßig einfache Art und Weise durch Winkelprofilstahlabschnitte, vorzugsweise - wie in Fig.2 veranschaulicht - durch ungleichschenklige Winkelprofile, gebildet sein, deren einer (längerer) Schenkel jeweils die Lauffläche 12a bzw. 13a für die entsprechenden Führungsrollen 9a bzw. 9b bildet. Es kann dabei außerdem zweckmäßig sein, die Halterungen oder die Führungsschienen 12, 13 selbst lösbar, d.h. austauschbar zu befestigen, um im Bedarfsfalle zerschlissene Schienen rasch und einfach auswechseln zu können.

In Fig.2 ist ferner gut zu erkennen, daß die erfindungsgemäße Ausbildung und Anordnung der Stützrollen 9a, 9b und der zugehörigen Führungsschienen 12 bzw. 13 bei der symmetrischen Anordnung zur jeweils zugehörigen Bezugslängsmittelebene 6a bzw. 7a sowie die symmetrische Anordnung beider Laschenförderketten 6, 7 der Kratzerschaufeln 5 und aller zugehörigen Führungseinrichtungen zur Hauptlängsmittelebene 1c des ganzen Kratzerförderers 1 eine insgesamt äußerst zuverlässige und kippsichere Abstützung, Führung und Betriebsweise gestatten.

Der Vollständigkeit halber sei noch erwähnt, daß die Rollenführungseinrichtungen im Bereich des Rücklauftrums 1b des Förderers 1 vereinfacht ausgeführt und beispielsweise durch jeweils einfache Flach- oder Winkelschienen gebildet sein können.

In Fig.3 ist ferner eine weitere vorteilhafte Ausgestaltung des Kratzerförderers 1 im Bereich seiner Laschenförderketten 6, 7 veranschaulicht. Danach tragen einige der Laschenkettenglieder 10 auf ihrer einen Außenseite seitlich vorstehende Reinigungslappen 15, die auf einfache Weise durch angeschraubte oder angeschweißte Winkelstücke (wie veranschaulicht) gebildet sein können. Im allgemeinen wird es ausreichend sein, diese Reinigungslappen 15 zum einen mit relativ großem Längsabstand (also mit mehreren dazwischenliegenden Laschenkettengliedern ohne Reinigungslappen) voneinander anzuordnen und zum andern lediglich auf den Außenseiten der Laschenförderketten 6, 7 bzw. der Laschenkettenglieder 10 anzubringen, auf denen die Stützrollen (im vorliegenden Beispiel die Stützrollen 9b) liegen, die von den unteren Führungsschienen 13 abgestützt werden, auf deren Laufflächen 13a sich am ehesten Schüttgut ablagern kann. Damit diese Laufflächen 13a zuverlässig von evtl. abgelagertem Schüttgut freigeräumt (gereinigt) werden können, entsprechen die Reinigungslappen 15 in ihrer Breite wenigstens der Breite der Stützrollen 9a bzw. 9b, und sie werden dabei an bzw. auf den Laufflächen der zugehörigen Führungsschienen, also insbesondere auf den unteren Laufflächen 13a der unteren Führungsschienen 13 entlang geführt.

## Patentansprüche

1. Kratzerförderer für loses Schüttgut, mit einem unteren Gutfördertrum (1a) und einem oberen Rücklauftrum (1b), insbesondere in Form eines Schüttgut von einer Schüttguthalde (3) entnehmenden Abbaukratzerförderers, enthaltend eine Vielzahl von in Gutförderrichtung (4) hintereinander angeordneten, schaufelförmigen Förderelementen (5), die durch wenigstens ein endlos umlaufendes Zugmittel (6, 7) verbunden sind und die im Bereich wenigstens zweier parallel zueinander verlaufender Bezugslängsmittelebenen (6a, 7a) jeweils über Stützrollen (9a, 9b) von schienenförmigen Rollenführungseinrichtungen (12, 13) mit oberen und unteren Laufflächen (12a, 13a) abgestützt und geführt sind,
dadurch gekennzeichnet,
daß die Stützrollen (9a, 9b) auf beiden Seiten der zugehörigen Bezugslängsmittelebene (6a, 7a) vorgesehen sind und jede Rollenführungseinrichtung zumindest im Bereich des unteren Gutfördertrums (1a) eine über den Stützrollen (9a) auf der einen Seite der Bezugslängsmittelebene liegende, die obere Lauffläche (12a) bildende obere Führungsschiene (12) sowie eine unter den Stützrollen (9b) auf der anderen Seite der Bezugslängsmittelebene liegende, die untere Lauffläche (13a) bildende untere Führungsschiene (13) enthält.

2. Kratzerförderer nach Anspruch 1, dadurch gekennzeichnet, daß die Stützrollen (9a, 9b) in Längsrichtung des Förderers (1) in gleichmäßiger Verteilung einander abwechselnd auf der einen und auf der anderen Seite jeder Bezugslängsmittelebene (6a, 7a) angeordnet sind.

3. Kratzerförderer nach Anspruch 2, wobei als Zugmittel für die Förderelemente wenigstens zwei mit Abstand und parallel zueinander verlaufende Laschenförderketten (6, 7) vorgesehen sind, deren Kettenglieder (10) durch gleichzeitig die Stützrollen (9a, 9b) drehbeweglich lagernde Gelenkbolzen (11) verbunden sind, dadurch gekennzeichnet, daß die Längsmittelebenen (6a, 7a) der Laschenförderketten (6, 7) die Bezugslängsmittelebenen bilden und die Stützrollen (9a, 9b) einander abwechselnd auf der einen und anderen Außenseite der Laschenförderketten auf den entsprechenden, jeweils einseitig seitlich auskragenden Gelenkbolzen (11) angeordnet sind.

4. Kratzerförderer nach Anspruch 3, dadurch gekennzeichnet, daß einige Laschenkettenglieder (10) auf ihrer Außenseite seitlich vorstehende Reinigungslappen (15) tragen, die wenigstens der Breite der Stützrollen (91, 9b) entsprechen und an den Laufflächen, insbesondere auf den unteren Laufflächen (13a) der unteren Führungsschienen (13), entlang führbar sind.

5. Kratzerförderer nach Anspruch 2, wobei die Rollenführungseinrichtungen an einem fachwerkartigen Rahmengestell (15) des Förderers (1) fest gehaltert sind, dadurch gekennzeichnet, daß die oberen und unteren Führungsschienen (12, 13) durch am Rahmengestell (14) befestigte Winkelprofilstahlabschnitte gebildet sind, deren einer Schenkel jeweils die Lauffläche (12a, 13a) der entsprechenden Stützrollen (9a, 9b) bildet.
